# EUROPÄISCHE PATENTANMELDUNG

(11) **EP 4 001 189 A1**
(43) Veröffentlichungstag der Anmeldung: **25.05.2022**
(21) Anmeldenummer: 21204915.9
(22) Anmeldetag: 27.10.2021
(51) Int. Cl.: B65G 47/86, B65G 54/02

(54) **VORRICHTUNG ZUM BEHANDELN VON BEHÄLTERN**

(30) Priorität: 13.11.2020 DE 102020129995
(71) Anmelder: KRONES AG, 93073 Neutraubling (DE)
(72) Erfinder: SENN, Konrad, 93073 Neutraubling (DE); DOELLINGER, Andreas, 93073 Neutraubling (DE)
(74) Vertreter: v. Bezold & Partner Patentanwälte - PartG mbB

(57) **Zusammenfassung**

Die Erfindung betrifft eine Vorrichtung (10A-10F) zum Behandeln von Behältern (12), aufweisend eine Behälterbehandlungsvorrichtung (20), mehrere Bewegungsvorrichtungen (16), die dazu ausgebildet sind, jeweils mindestens einen Behälter (12) zu halten, und eine Transportbahn (14), entlang der die mehreren Bewegungsvorrichtungen (16) bewegbar sind. Mehrere Transfersegmente (28, 29, 30, 31, 32) der Transportbahn (14) sind nacheinander zu der Behälterbehandlungsvorrichtung (20) zum Behandeln der von der jeweiligen Gruppe der mehreren Bewegungsvorrichtungen (16) gehaltenen Behälter (12) bewegbar. Vorteilhaft ermöglicht der Einsatz der mehreren bewegbaren Transfersegmente (28, 29, 30, 31, 32), dass nur minimale Totzeiten bei der Behälterbehandlungsvorrichtung (20) auftreten.

## Beschreibung

### Technisches Gebiet

Die Erfindung betrifft eine Vorrichtung zum Behandeln von Behältern mit einer Behälterbehandlungsvorrichtung, mehreren Bewegungsvorrichtungen und einer Transportbahn, entlang der die mehreren Bewegungsvorrichtungen bewegbar sind.

### Technischer Hintergrund

Behälter werden in Abfüll- und Verpackungsanlagen auf fest definierten Transportbahnen durch die einzelnen Anlagenteile transportiert, gereinigt, gefüllt, verschlossen, etikettiert, inspiziert und ausgeschleust, gruppiert und verpackt, und zwar mit einer aufgrund von Prozesszeiten eingestellten Ausstoßleistung.

Die DE 10 2017 223 078 A1 offenbart eine Vorrichtung zum Behandeln von Behältern, umfassend eine Behälterbehandlungsstation, eine Transportbahn und ein Trägerelement zur Aufnahme von mindestens einem Behälter, das über ein Transportelement entlang der Transportbahn bewegt werden kann. Ein Segment der Transportbahn ist so ausgebildet, dass es mit einem Trägerelement bewegt werden kann, sodass durch die Bewegung des Segments, die am Trägerelement aufgenommenen Behälter zur Behälterbehandlung in die Behälterbehandlungsstation eingebracht werden können. Bei der Bewegung des Segments und Einbringen der am Trägerelement aufgenommenen Behälter in die Behälterbehandlungsstation wird das bewegte Segment der Transportbahn durch ein weiteres Transportbahnsegment ersetzt. Somit können weitere Trägerelemente mit Behältern auf der Transportbahn vorbeigeführt werden.

Die DE 10 2017 127 322 A1 bezieht sich auf eine Vorrichtung zum gruppenweisen Aufnehmen und Zuführen einer Behältergruppe an eine getaktete Behandlungsmaschine mit einer getakteten Aufnahmevorrichtung zur Aufnahme der Behältergruppe. Diese umfasst eine Einlaufvorrichtung als eine geschlossene Transportstrecke, sowie eine Zuleitvorrichtung. Die Einlaufvorrichtung weist einen linearen Transportstreckenabschnitt auf und die Einlaufvorrichtung ist zum hängenden Transport der Behälter entlang der Transportstrecke ausgebildet. In einem Übergangsbereich zwischen der Einlaufvorrichtung und der Aufnahmevorrichtung ist eine Transfereinrichtung vorgesehen, die eine Vielzahl von Greifern zum Aufnehmen einer Behältergruppe aus dem kontinuierlichen Behälterstrom im Bereich des Transportstreckenabschnittes der Einlaufvorrichtung umfasst, und die zum Zuführen der aufgenommenen Behältergruppe an die getaktete Aufnahmevorrichtung geeignet ist.

Der Erfindung liegt die Aufgabe zu Grunde, eine alternative und/oder verbesserte Vorrichtung zur Behandeln von Behältern zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zum Behandeln von Behältern (z. B. für eine Behälterbehandlungsanlage zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist eine (z. B. stationäre) Behälterbehandlungsvorrichtung (z. B. Linearbehälterbehandlungsvorrichtung) auf. Die Vorrichtung weist mehrere Bewegungsvorrichtungen, die, vorzugsweise unabhängig voneinander, bewegbar und dazu ausgebildet sind, jeweils mindestens einen Behälter zu halten. Die Vorrichtung weist eine Transportbahn auf, entlang der die mehreren Bewegungsvorrichtungen (z. B. translatorisch) bewegbar sind. Die Transportbahn weist mehrere Transfersegmente, entlang denen jeweils eine Gruppe der mehreren Bewegungsvorrichtungen bewegbar ist, auf. Die mehreren Transfersegmente sind nacheinander (z. B. abwechselnd) zu der Behälterbehandlungsvorrichtung zum Behandeln der von der jeweiligen Gruppe der mehreren Bewegungsvorrichtungen gehaltenen Behälter bewegbar.

Vorteilhaft ermöglicht der Einsatz der mehreren bewegbaren Transfersegmente, dass nur minimale Totzeiten bei der Behälterbehandlungsvorrichtung auftreten. Sobald die von der Gruppe gehaltenen Behälter eines der mehreren Transfersegmente von der Behälterbehandlungsvorrichtung behandelt wurden, kann das nächste Transfersegment zu der Behälterbehandlungsvorrichtung zum Behandeln der von der jeweiligen Gruppe getragenen Behälter bewegt werden. Es werden kontinuierliche Transfersegmentwechsel bei der Behälterbehandlungsvorrichtung ermöglicht. Die Leistung bzw. der Durchsatz der Vorrichtung kann dadurch erheblich gesteigert werden. Bezogen auf die Leistung kann die Vorrichtung zudem vergleichsweise kompakt sein. Es ist möglich, dass eine für die Behälterbehandlung notwendige Bewegung nicht durch eine Zusatzkinematik der Bewegungsvorrichtungen bereitzustellen ist, sondern durch die Bewegbarkeit der mehreren Transfersegmente realisiert werden kann. Für die Konstruktion kann zudem ein Baukastenprinzip zur beliebigen Erweiterbarkeit verwendet werden, bei dem beispielsweise die mehreren Transfersegmente als Gleichteile ausgeführt sind.

Bevorzugt ist die jeweilige Gruppe der mehreren Bewegungsvorrichtungen während einer Bewegung des jeweiligen Transfersegments in einer Ruheposition.

In einem Ausführungsbeispiel weist die Vorrichtung einen Linearantrieb, vorzugsweise Langstator-Linearantrieb oder Kurzstator-Linearantrieb, zum Antreiben der mehreren Bewegungsvorrichtungen entlang der Transportbahn auf.

In einem weiteren Ausführungsbeispiel sind die mehreren Transfersegmente auf einer (z. B. offenen oder geschlossenen) Bewegungskurve bewegbar, vorzugsweise umlaufend oder pendelnd hinund herbewegbar.

Beispielsweise kann die Bewegungskurve in einer Ebene verlaufen, die geneigt, vorzugsweise senkrecht, zu einer Längsachse der mehreren Transfersegmente ausgerichtet ist.

In einem weiteren Ausführungsbeispiel weist die Bewegungskurve eine Einlaufposition auf, in der das jeweilige Transfersegment die jeweilige Gruppe der mehreren Bewegungsvorrichtungen empfängt (z. B. von einem Einlaufsegment der Transportbahn). Alternativ oder zusätzlich weist die Bewegungskurve eine Behandlungsposition auf, in der das jeweilige Transfersegment an der Behälterbehandlungsvorrichtung zur Behandlung der von der jeweiligen Gruppe der mehreren Bewegungsvorrichtungen gehaltenen Behälter positioniert ist. Alternativ oder zusätzlich weist die Bewegungskurve eine Auslaufposition auf, in der das jeweilige Transfersegment die jeweilige Gruppe der mehreren Bewegungsvorrichtungen abgibt (z. B. an ein Auslaufsegment der Transportbahn).

Es ist möglich, dass die Einlaufposition und die Auslaufposition voneinander beabstandet ist oder gleich positioniert ist.

In einem weiteren Ausführungsbeispiel weist ein Bewegungsabschnitt der Bewegungskurve von der Einlaufposition zu der Behandlungsposition eine Vertikalbewegung nach oben auf, sodass bevorzugt eine Wirkverbindung zwischen der Behälterbehandlungsvorrichtung und den von der jeweiligen Gruppe der mehreren Bewegungsvorrichtungen gehaltenen Behältern erreichbar ist. Alternativ oder zusätzlich kann bspw. ein Bewegungsabschnitt der Bewegungskurve von der Behandlungsposition zu der Auslaufposition eine Vertikalbewegung nach unten aufweisen, sodass bevorzugt eine Wirkverbindung zwischen der Behälterbehandlungsvorrichtung und den von der jeweiligen Gruppe der mehreren Bewegungsvorrichtungen gehaltenen Behältern trennbar ist. Vorteilhaft kann die Hubbewegung ein Füllen von CSD-Produkten (carbonated soft drink(s) - CO2-haltige, alkoholfreie Getränke) ermöglichen.

In einer Ausführungsform ist ein erstes Transfersegment der mehreren Transfersegmente in der Einlaufposition, während ein zweites Transfersegment der mehreren Transfersegmente in einem von der Behandlungsposition und der Auslaufposition ist und optional während ein drittes Transfersegment der mehreren Transfersegmente im anderen von der Behandlungsposition und der Auslaufposition ist. Vorteilhaft kann auf diese Weise die Totzeit der Behälterbehandlungsposition erheblich verringert werden.

In einer Ausführungsform ist die Behälterbehandlungsvorrichtung oberhalb von den mehreren Transfersegmente und/oder oberhalb von der Transportbahn angeordnet, vorzugweise aufgehängt.

In einer weiteren Ausführungsform weist die Behälterbehandlungsvorrichtung mehrere, vorzugsweise linear angeordnete, Fülleinrichtungen (z. B. Füllventile) zum Befüllen der Behälter auf, und/oder die Behälterbehandlungsvorrichtung weist mehrere, vorzugsweise linear angeordnete, Sterilisationseinrichtungen zum Sterilisieren der Behälter auf, und/oder die Behälterbehandlungsvorrichtung weist mehrere, vorzugsweise linear angeordnete, Rinseinrichtungen zum Rinsen der Behälter auf.

In einer weiteren Ausführungsform sind die mehreren Transfersegmente parallel angeordnet, und/oder die mehreren Transfersegmente sind translatorisch und/oder rotatorisch bewegbar, vorzugsweise unter Beibehaltung einer parallelen Ausrichtung zueinander.

In einer weiteren Ausführungsform sind die mehreren Transfersegmente geradlinig ausgeführt, und/oder die mehreren Transfersegmente sind als Schienen, Rollbahnen oder Gleitbahnen ausgeführt.

In einer Ausführungsvariante sind die mehreren Transfersegment jeweils in einem eigenen Gehäuse aufgenommen, das bevorzugt mit dem jeweiligen Transfersegment mitbewegbar ist.

In einer weiteren Ausführungsvariante sind die mehreren Transfersegmente zumindest abschnittsweise mehrbahnig, vorzugsweise doppelbahnig, zum jeweils parallelen Transportieren der Gruppe der mehreren Bewegungsvorrichtungen ausgeführt.

In einer weiteren Ausführungsvariante weisen die mehreren Bewegungsvorrichtungen jeweils eine Einfachhalterung, die zum Halten jeweils eines einzigen Behälters ausgebildet ist, auf. Alternativ können die mehreren Bewegungsvorrichtungen bevorzugt jeweils eine Doppelhalterung, die zum gleichzeitigen Halten von jeweils zwei Behältern, vorzugsweise an entgegengesetzten Außenseiten der jeweiligen Bewegungsvorrichtung, ausgebildet ist, aufweisen.

In einem Ausführungsbeispiel weist die Transportbahn mindestens ein (z. B. stationäres) Einlaufsegment auf, von dem die mehreren Bewegungsvorrichtungen zu den mehreren Transfersegmenten bewegbar sind. Alternativ oder zusätzlich weist die Transportbahn mindestens ein (z. B. stationäres) Auslaufsegment auf, zu dem die mehreren Bewegungsvorrichtungen von den mehreren Transfersegmenten bewegbar sind.

In einem weiteren Ausführungsbeispiel sind das mindestens eine Einlaufsegment und das mindestens eine Auslaufsegment parallel beabstandet zueinander und/oder nicht-fluchtend miteinander angeordnet.

In einem weiteren Ausführungsbeispiel sind ein (z. B. einziges) Einlaufsegment und ein (z. B. einziges) Auslaufsegment umfasst. Die mehreren Transfersegmente sind auf einer geschlossenen Bewegungskurve von dem Einlaufsegment zu der Behälterbehandlungsvorrichtung zu dem Auslaufsegment und zurück zu dem Einlaufsegment bewegbar, vorzugsweise nacheinander.

In einem weiteren Ausführungsbeispiel sind ein erstes Einlaufsegment, ein zweites Einlaufsegment und ein (z. B. einziges) Auslaufsegment umfasst. Mindestens ein erstes der mehreren Transfersegmente ist auf einer ersten geschlossenen Bewegungskurve von dem ersten Einlaufsegment zu einem ersten Abschnitt der Behälterbehandlungsvorrichtung zu dem Auslaufsegment und zurück zu dem ersten Einlaufsegment bewegbar, vorzugsweise nacheinander. Mindestens ein zweites der mehreren Transfersegmente ist auf einer zweiten geschlossenen Bewegungskurve von dem zweiten Einlaufsegment zu einem zweiten Abschnitt der Behälterbehandlungsvorrichtung zu dem Auslaufsegment und zurück zu dem zweiten Einlaufsegment bewegbar, vorzugsweise nacheinander.

In einem weiteren Ausführungsbeispiel sind ein erstes Einlaufsegment, ein zweites Einlaufsegment, ein erstes Auslaufsegment und ein zweites Auslaufsegment umfasst. Ein erstes Transfersegment der mehreren Transfersegmente ist hin- und herbewegbar zwischen einerseits dem ersten Einlaufsegment und dem ersten Auslaufsegment und andererseits der Behälterbehandlungsvorrichtung, vorzugsweise pendelnd. Ein zweites Transfersegment der mehreren Transfersegmente ist hinund herbewegbar zwischen einerseits dem zweiten Einlaufsegment und dem zweiten Auslaufsegment und andererseits der Behälterbehandlungsvorrichtung, vorzugsweise pendelnd.

Bevorzugt können das erste Einlaufsegment und das erste Auslaufsegment fluchtend miteinander angeordnet sein, und/oder das zweite Einlaufsegment und das zweite Auslaufsegment können fluchtend miteinander angeordnet sein.

Vorzugsweise können das erste Einlaufsegment und das zweite Einlaufsegment parallel beabstandet sein, und/oder das erste Auslaufsegment und das zweite Auslaufsegment können parallel beabstandet sein.

Beispielsweise kann das erste Transfersegment bei der Behälterbehandlungsvorrichtung positioniert sein, während das zweite Transfersegment bei dem zweiten Einlaufsegment und dem zweiten Auslaufsegment positioniert ist, und/oder das zweite Transfersegment kann bei der Behälterbehandlungsvorrichtung positioniert sein, während das erste Transfersegment bei dem ersten Einlaufsegment und dem ersten Auslaufsegment positioniert ist.

In einer Ausführungsform weist die Vorrichtung ferner eine Verschließeinrichtung, die zum Verschießen der Behälter ausgebildet und entlang des mindestens einen Auslaufsegments angeordnet ist, auf.

In einer weiteren Ausführungsform weist die Vorrichtung einen Stickstoffdroppler, der zum Behandeln der Behälter ausgebildet und entlang des mindestens einen Auslaufsegments angeordnet ist, auf.

Es ist möglich, dass die Vorrichtung eine Steuereinheit aufweist, die dazu konfiguriert ist, eine Bewegung der mehreren Bewegungsvorrichtungen und/oder der mehreren Transfersegment zu steuern.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1A: eine schematische Draufsicht auf eine Vorrichtung zur Behandlung von Behältern gemäß einem Ausführungsbeispiel der vorliegenden Offenbarung;
- Figur 1B: eine schematische Stirnansicht einer Bewegungskurve mehrerer Transfersegmente der Vorrichtung von Figur 1A;
- Figur 2A: eine schematische Draufsicht auf eine Vorrichtung zur Behandlung von Behältern gemäß einem weiteren Ausführungsbeispiel der vorliegenden Offenbarung;
- Figur 2B: eine schematische Stirnansicht einer Bewegungskurve mehrerer Transfersegmente der Vorrichtung von Figur 2A;
- Figur 3A: eine schematische Draufsicht auf eine Vorrichtung zur Behandlung von Behältern gemäß einem weiteren anderen Ausführungsbeispiel der vorliegenden Offenbarung;
- Figur 3B: eine schematische Stirnansicht zweier Bewegungskurven mehrerer Transfersegmente der Vorrichtung von Figur 3A;
- Figur 4A: eine schematische Draufsicht auf eine Vorrichtung zur Behandlung von Behältern gemäß einem Ausführungsbeispiel der vorliegenden Offenbarung;
- Figur 4B: eine schematische Stirnansicht zweier Bewegungskurven mehrerer Transfersegmente der Vorrichtung von Figur 4A;
- Figur 5A: eine schematische Draufsicht auf eine Vorrichtung zur Behandlung von Behältern gemäß einem weiteren anderen Ausführungsbeispiel der vorliegenden Offenbarung;
- Figur 5B: eine schematische Stirnansicht zweier Bewegungskurven mehrerer Transfersegmente der Vorrichtung von Figur 5A;
- Figur 6A: eine schematische Draufsicht auf eine Vorrichtung zur Behandlung von Behältern gemäß einem weiteren anderen Ausführungsbeispiel der vorliegenden Offenbarung;
- Figur 6B: eine schematische Stirnansicht zweier Bewegungskurven mehrerer Transfersegmente der Vorrichtung von Figur 6A;
- Figur 6C: eine schematische Draufsicht auf eine Vorrichtung zum Transportieren von Behältern, die stromabwärts der Vorrichtung von Figur 6A anordenbar ist; und
- Figur 7: eine perspektivische Ansicht eines Transfersegments gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

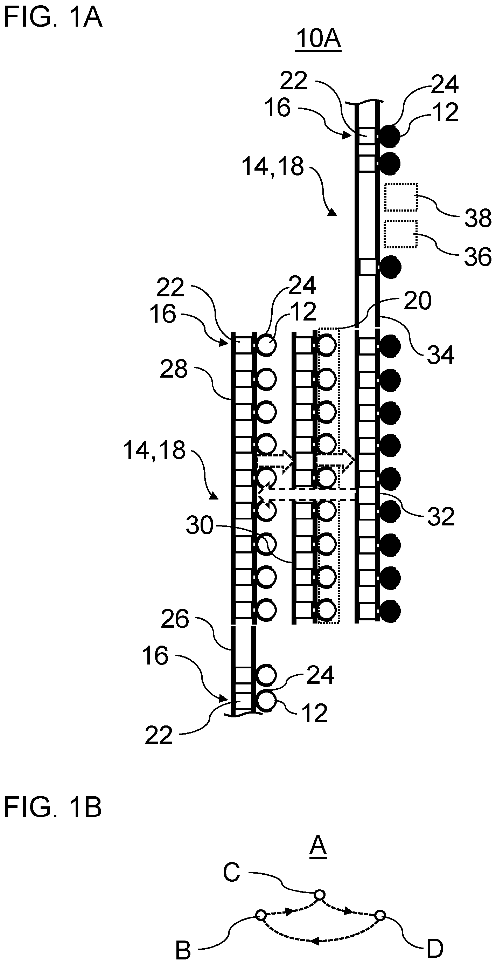

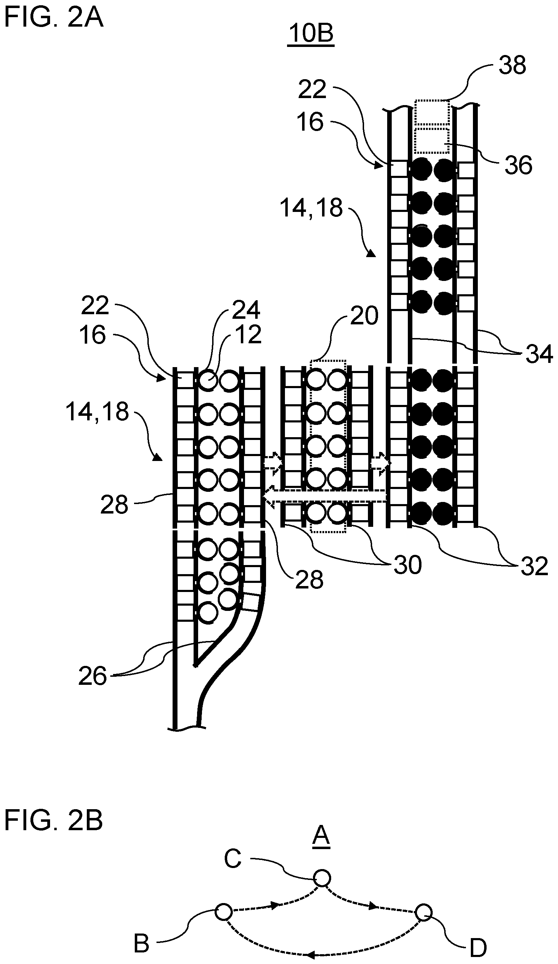

Figur 1A zeigt eine Vorrichtung 10A zum Behandeln von Behältern 12. Die Vorrichtung 10A (sowie die Vorrichtungen 10B bis 10F Der Figuren 2A bis 6A) sind bevorzugt in einer Behälterbehandlungsanlage umfasst. Die Behälter 12 können bspw. Flaschen, Dosen, Kanister, Kartons oder Flakons sein, und/oder jegliche Form (z. B. rund, eckig, oval usw.) aufweisen. Aus Übersichtsgründen sind in der Figur 1A (und den weiteren Figuren) lediglich einige der Behälter 12 mit einem Bezugszeichen gekennzeichnet.

Die Vorrichtung 10A weist eine Transportbahn 14, mehrere Bewegungsvorrichtungen 16, einen Linearantrieb 18 sowie eine Behälterbehandlungsvorrichtung 20 auf. Aus Übersichtsgründen sind in der Figur 1A (und den weiteren Figuren) lediglich einige der Bewegungsvorrichtungen 16 mit einem Bezugszeichen gekennzeichnet.

Die Transportbahn 14 kann zum Führen und vorzugweise Tragen der mehreren Bewegungsvorrichtungen ausgeführt sein. Die Transportbahn 14 kann bspw. als eine Rollbahn für Rollen oder Gleitbahn für Gleitschuhe ausgeführt sein, z. B. in Form von Schienen. Die Transportbahn 14 kann aus mehreren Segmenten zusammengesetzt sein. Bevorzugt ist die Transportbahn 14 eine geschlossene Transportbahn. Die Bewegungsvorrichtungen 16 können entlang der geschlossenen Transportbahn 14 zirkulieren bzw. umlaufen. Es ist allerdings auch möglich, dass die Transportbahn 14 offen ausgeführt ist, und sich die Bewegungsvorrichtungen 16 entlang der Transportbahn hin- und herbewegen.

Die Bewegungsvorrichtungen bzw. Mover 16 weisen jeweils einen Grundkörper 22 und eine Halterung 24 auf. Aus Gründen der Übersichtlichkeit sind in der Figur 1A (und den weiteren Figuren) nur einige Grundkörper 22 und Halterungen 24 mit einem Bezugszeichen gekennzeichnet.

Der Grundkörper 22 kann mittels mehrerer Führungselemente an der Transportbahn 14 geführt und abgestützt sein. Die Führungselemente können als drehbare Rollen ausgeführt sein, die auf denen als Rollbahn ausgeführten Segmenten der Transportbahn 14 abrollbar sind. Es ist auch möglich, dass die Führungselemente anders ausgeführt sind, z. B. als Gleitschuhe, Führungszapfen usw.

Die Bewegungsvorrichtungen 16 werden mittels des Linearantriebs 18 entlang der (gesamten) Transportbahn 14 angetrieben. Der Linearantrieb 18 (nicht im Detail in Figur 1A dargestellt) ist bevorzugt als Langstator-Linearantrieb ausgeführt. Ein Langstator erstreckt sich parallel zu der Transportbahn 14. Der Langstator kann entlang der Transportrichtung aus mehreren miteinander verbundenen Langstatorsegmenten gebildet sein. Der Grundkörper 22 weist mindestens einen Permanentmagnet auf. Die Langstatorsegmente des Langstators können in magnetische Wechselwirkung mit dem mindestens einen Permanentmagnet der Bewegungsvorrichtungen 16 treten. Der Langstator und der mindestens eine Permanentmagnet bilden somit einen sogenannten Langstator-Linearmotor. Durch die magnetische Wechselwirkung kann die Bewegungsvorrichtung 16 entlang der Transportbahn 14 bewegt werden. Im Einzelnen kann jede Bewegungsvorrichtung 16 einzeln und individuell von dem Langstator entlang der Transportbahn 14 bewegt werden.

Auch wenn der Antrieb mittels Langstator-Linearmotor besonders bevorzugt ist, wurde erkannt, dass die hierin offenbarten Techniken auch bei anderen Antriebskonzepten eingesetzt werden können. Es ist somit beispielsweise auch möglich, die Bewegungsvorrichtungen 16 mittels einer anderen Antriebstechnik individuell anzutreiben bzw. fortzubewegen, vorzugsweise jedoch mit einem Linearantrieb. Z. B. kann der Linearantrieb auch als ein Kurzstator-Linearantrieb ausgeführt sein, bei dem sich Permanentmagnete entlang der Transportbahn 14 erstrecken und die Grundköper 22 der Bewegungsvorrichtungen 16 mindestens einen Elektromagneten aufweisen. Es ist auch möglich, dass jede der Bewegungsvorrichtungen 16 eine eigene zweckmäßig elektrische Antriebseinheit aufweist, mit der beispielsweise Räder oder Rollen der Bewegungsvorrichtungen 16 entlang der Transportbahn 14 antreibbar sind.

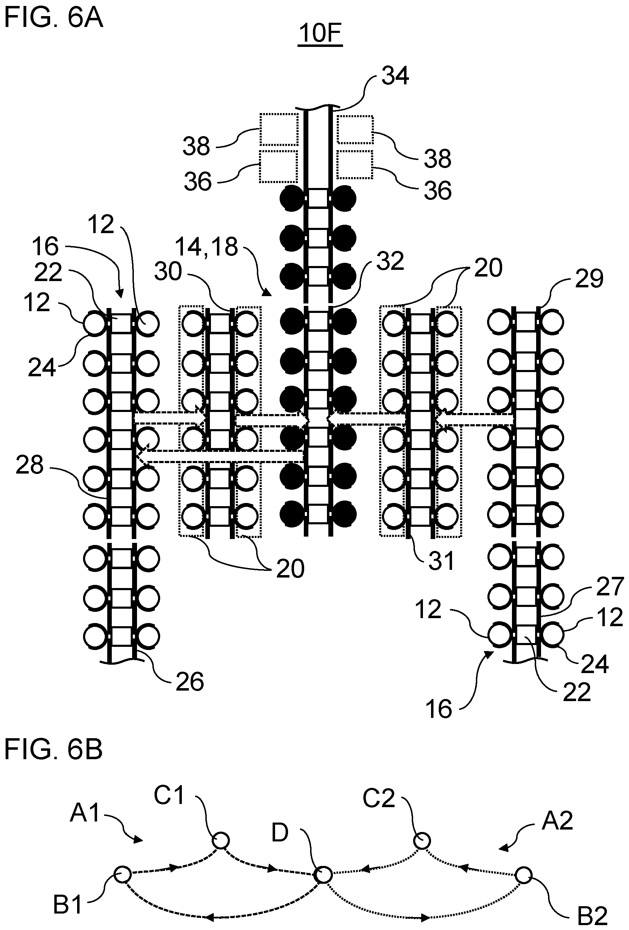

Die Halterung 24 ist zum Halten mindestens eines Behälters 12 ausgeführt. Die Halterung 24 kann beispielsweise als eine Einfachhalterung, die zum Halten jeweils eines einzigen Behälters 12 ausgebildet ist, ausgeführt sein, wie in Figur 1A dargestellt ist. Alternativ kann die Halterung 24 beispielsweise als eine Doppelhalterung ausgebildet sein (siehe z. B. Ausführungsform von Figur 6A).

Die Halterung 24 kann beispielsweise als mindestens ein vorgespannte Klammer, als Dorn oder als betätigbarer Greifer ausgeführt sein. Die Halterung 24 hält und trägt den mindestens einen Behälter 12 beispielsweise an einem Behälterhals, einem Behälterrumpf und/oder einem Behälterboden des Behälters 12. Vorzugsweise trägt die Halterung 24 mindestens einen Behälter 12 unterhalb eines Halsrings (Neckrings) des Behälters 12. Der Behälter 12 ist lösbar durch die Halterung 24 gehalten. In anderen Ausführungsformen kann die Halterung 24 auch anders ausgeführt sein, um beispielsweise andere Behälter mit anderen Formen zu halten.

Die Transportbahn 14 weist ein Einlaufsegment 26, mehrere bewegbare Transfersegmente 28, 30, 32 und ein Auslaufsegment 34 auf.

Mittels des Einlaufsegments 26 können die Bewegungsvorrichtungen 16 zu den Transfersegmenten 28, 30, 32 bewegt werden. Sofern eines der Transfersegmente 28, 30, 32 mit dem Einlaufsegment 26 ausgerichtet ist und sich an dessen Ende anschließt bzw. angrenzt, können mehrere der Bewegungsvorrichtungen 16 von dem Einlaufsegment 26 zu dem jeweilige Transfersegment 28, 30, 32 bewegt bzw. übergeben werden, z. B. an das Transfersegment 28 wie in Figur 1A dargestellt. Das Einlaufsegment 26 kann bspw. stromabwärts von einer Behälterblasmaschine (nicht dargestellt in Figur 1A) zum Herstellen der Behälter 12 aus Behälterrohlingen bzw. Preforms angeordnet sein.

Mittels des Auslaufsegments 34 können die Bewegungsvorrichtungen 16 von den Transfersegmenten 28, 30, 32 übernommen werden. Sofern eines der Transfersegmente 28, 30, 32 mit dem Auslaufsegment 34 ausgerichtet ist und sich an dessen Anfang anschließt, können mehrere der Bewegungsvorrichtungen 16 von dem jeweiligen Transfersegment 28, 30, 32 zu dem Auslaufsegment 34 bewegt bzw. übergeben werden, z. B. an von dem Transfersegment 32 wie in Figur 1A dargestellt.

Das Einlaufsegment 26 und/oder das Auslaufsegment 34 sind bevorzugt stationär bzw. ortsfest angeordnet. Vorzugsweise sind das Einlaufsegment 26 und das Auslaufsegment 34 parallel und nicht fluchtend miteinander angeordnet. Es ist möglich, dass mehr als ein Einlaufsegment 26 und/oder mehr als ein Auslaufsegment 34 vorhanden ist. Es ist auch möglich, dass ein Segment in sich sowohl das Einlaufsegment 26 als auch das Auslaufsegment 34 integriert bzw. vereinigt. Es ist ebenfalls möglich, dass kein Einlaufsegment und/oder kein Auslaufsegment vorhanden ist und die Bewegungsvorrichtungen 16 auf eine andere Art und Weise zu den Transfersegmenten 28, 30, 32 übergeben bzw. von den Transfersegmenten 28, 30, 32 übernommen werden.

Die Transfersegmente 28, 30, 32 können jeweils mehrere Bewegungsvorrichtungen 16 aufnehmen, z. B. in Reihe und/oder parallel. Die Transfersegmente 28, 30, 32 sind parallel angeordnet. Bevorzugt sind die Transfersegmente 28, 30, 32 zwischen dem Einlaufsegment 26 und dem Auslaufsegment 34 angeordnet. Es ist aber auch möglich, dass das Einlaufsegment 26 und das Auslaufsegment 34 bspw. auf derselben Seite der Transfersegmente 28, 30, 32 angeordnet sind. Die Transfersegmente 28, 30, 32 sind bevorzugt geradlinig. Es ist möglich, dass mehr oder weniger als die drei Transfersegmente 28, 30, 32 vorhanden sind.

Die Transfersegmente 28, 30, 32 sind bewegbar, bevorzugt unter Beibehaltung der parallelen Ausrichtung zueinander. Je nach Ausführung können die Transfersegmente 28, 30, 32 translatorisch und/oder rotatorisch bewegbar sein.

Insbesondere sind die Transfersegmente 28, 30, 32 jeweils nacheinander zu dem Einlaufsegment 26, der Behälterbehandlungsvorrichtung 20 und dem Auslaufsegment 34 bewegbar. Während bspw. das Transfersegment 28 gerade bei dem Einlaufsegment 26 zur Übernahme von Bewegungsvorrichtungen 16 positioniert ist, ist das Transfersegment 30 zur Behälterbehandlung gerade bei der Behälterbehandlungsvorrichtung 20 positioniert, und das Transfersegment 32 ist zur Übergabe der Bewegungsvorrichtungen 16 gerade bei dem Auslaufsegment 34 positioniert. Als nächstes kann das Transfersegment 28 zu der Behälterbehandlungsvorrichtung 20 bewegt werden, das Transfersegment 30 kann zu dem Auslaufsegment 34 bewegt werden, und das Transfersegment 32 kann zu dem Einlaufsegment 26 bewegt werden, usw.

Wenn das jeweilige Transfersegment 28, 30 oder 32 beim Einlaufsegment 26 positioniert ist, bewegen sich jeweils mehrere Bewegungsvorrichtungen 16 mit von diesen gehaltenen Behältern 12 von dem Einlaufsegment 26 zu dem jeweiligen Transfersegment 28, 30 oder 32 und stoppen auf diesem. Das jeweilige Transfersegment 28, 30 oder 32 bewegt sich mit den entsprechenden Bewegungsvorrichtungen 16 mit den Behältern 12 zu der Behälterbehandlungsvorrichtung 20. Wenn das jeweilige Transfersegment 28, 30 oder 32 beim Behälterbehandlungsvorrichtung 20 positioniert ist, werden die von den Bewegungsvorrichtungen 16 gehaltenen Behälter 12 von der Behälterbehandlungsvorrichtung 20 behandelt. Das jeweilige Transfersegment 28, 30, 32 bewegt sich dann mit den Bewegungsvorrichtungen 16 und den behandelten Behältern 12 weiter zu dem Auslaufsegment 34. Wenn das jeweilige Transfersegment 28, 30 oder 32 beim Auslaufsegment 34 positioniert ist, bewegen sich die Bewegungsvorrichtungen 16 mit den behandelten Behältern 12 von dem jeweiligen Transfersegment 28, 30 oder 32 zu dem Auslaufsegment 34. Das leere Transfersegment 28, 30 oder 32 wird dann wieder zurück zu dem Einlaufsegment 26 bewegt, ohne dass die anderen Transfersegmente dadurch behindert werden.

Figur 1B zeigt eine bevorzugte Bewegungskurve A für die Bewegung der Transfersegmente 28, 30, 32 in einer Stirnansicht bzw. gesehen von dem Einlaufsegment 26 in Richtung zu den Transfersegmenten 28, 30, 32.

Die Bewegungskurve A liegt bevorzugt in einer gedachten Ebene, die senkrecht zu den Längsachsen der Transfersegmente 28, 30, 32 ist. Die Bewegungskurve A ist eine geschlossene Kurve. Die Transfersegmente 28, 30, 32 können die Bewegungskurve A beabstandet zueinander umlaufen bzw. entlang dieser zirkulieren. Die Bewegungskurve A weist eine Einlaufposition B, eine Behandlungsposition C und eine Auslaufposition D auf. An den Positionen B, C und D können die Transfersegmente 28, 30, 32 jeweils anhalten. An der Einlaufposition B ist das jeweilige Transfersegment 28, 30 oder 32 angrenzend an das Einlaufsegment 26 positioniert. In der Behandlungsposition C ist das jeweilige Transfersegment 28, 30 oder 32 bei der Behälterbehandlungsvorrichtung 20 positioniert. In der Auslaufposition D ist das jeweilige Transfersegment 28, 30 oder 32 angrenzend an das Auslaufsegment 34 positioniert.

Bevorzugt kann die Bewegungskurve A von der Einlaufposition B zu der Behandlungsposition C eine Vertikalbewegungskomponente nach oben und eine Horizontalbewegungskomponente zur Seite (zur Behälterbehandlungsvorrichtung 20) aufweisen. Die Vertikalbewegungskomponente nach oben kann dabei helfen, eine Wirkverbindung zwischen der Behälterbehandlungsvorrichtung 20 (z. B. Füllventilen) und den gehaltenen Behältern 12 zu erreichen.

Von der Behandlungsposition C zu der Auslaufposition D kann die Bewegungskurve A eine Vertikalbewegungskomponente nach unten und eine Horizontalbewegungskomponente zur Seite (zum Auslaufsegment 34) aufweisen. Die Vertikalbewegungskomponente nach unten kann dabei helfen, eine Wirkverbindung zwischen der Behälterbehandlungsvorrichtung 20 (z. B. Füllventilen) und den gehaltenen Behältern 12 zu trennen.

Der Rückführabschnitt der Bewegungskurve A von der Ausleitposition D zu der Einlaufposition B kann unterhalb des Abschnitts von der Einlaufposition B über die Behandlungsposition C zu der Auslaufposition D angeordnet sein. Beispielsweise kann der Rückführabschnitt eine vorzugsweise nach unten ausgerichtete Bogenform aufweisen.

Die in Figur 1A nur schematisch dargestellte Behälterbehandlungsvorrichtung 20 ist zur Behandlung der Behälter 12 ausgebildet. In Figur 1A sind diejenigen Behälter 12, die von der Behälterbehandlungsvorrichtung 20 noch nicht behandelt wurden, als Ringe dargestellt. Diejenigen Behälter 12, die bereits von der Behälterbehandlungsvorrichtung 20 behandelt wurden, sind als gefüllte Kreise dargestellt. Während der Behandlung mittels der Behälterbehandlungsvorrichtung 20 sind die Behälter 12 bevorzugt weiterhin von den jeweiligen Bewegungsvorrichtungen 16 gehalten.

Bevorzugt ist die Behälterbehandlungsvorrichtung 20 oberhalb von den mehreren Transfersegmenten 28, 30, 32 und/oder oberhalb von der Transportbahn 14 angeordnet. Beispielsweise kann die Behälterbehandlungsvorrichtung 20 oberhalb von den mehreren Transfersegmenten 28, 30, 32 aufgehängt sein.

Besonders bevorzugt ist die Behälterbehandlungsvorrichtung 20 als eine Füllvorrichtung zum Befüllen der Behälter 12 mit einer Flüssigkeit (z. B. Getränk) oder einem pastösen Medium ausgebildet. Die Füllvorrichtung kann mehrere Füllventile bzw. Fülleinrichtungen aufweisen, die bevorzugt in Reihe bzw. linear angeordnet sind. Die von den Bewegungsvorrichtungen 16 gehaltenen Behälter 12 können von unten an die Füllventile herangeführt und anschließend gefüllt werden (vgl. Figur 1B).

Es ist auch möglich, dass die Behälterbehandlungsvorrichtung 20 alternative oder zusätzliche Behandlungselemente zur Behandlung der Behälter 12 aufweist. Beispielsweise kann die Behälterbehandlungsvorrichtung 20 Sterilisierungseinrichtungen zum Sterilisieren der Behälter 12 und/oder Rinseinrichtungen zum Rinsen der Behälter 12 aufweisen. Bevorzugt können die Behälter 12 beim Rinsen und/oder Sterilisieren über Kopf gehalten werden. Dies kann bspw. durch eine Schwenkbarkeit der Halterung 24 oder durch eine Rotierbarkeit der Transfersegmente 28, 30, 32, insbesondere um die jeweils eigene Längsachse, erreicht werden.

Entlang des Auslaufsegments 34 können weitere Behälterbehandlungsvorrichtungen angeordnet sein, z. B. ein Stickstoffdroppler 36 zum Behandeln der Behälter 12 und/oder eine Verschließeinrichtung 38 zum Verschließen der Behälter 12. Der Stickstoffdroppler 36 kann bspw. zur Steigerung der mechanischen Stabilität der Behälter 12 eine Kleinstmenge flüssigen Stickstoffs in die Behälter 12 zuführen. Die Verschließeinrichtung 38 kann die Behälter 12 mit einem Verschluss (z. B. Kronkorken, Deckel, Schraubverschluss, Korken usw.) verschließen.

Die Figuren 2A und 2B zeigen eine Vorrichtung 10B mit zugehöriger Bewegungskurve A für die Transfersegmente 28, 30, 32.

Ein Unterschied der Vorrichtung 10B zur Vorrichtung 10A von Figur 1A besteht darin, dass das Einlaufsegment 26, die Transfersegmente 28, 30, 32 und das Auslaufsegment 34 zumindest abschnittsweise jeweils doppelbahnig ausgeführt ist. Das Einlaufsegment 26, die Transfersegmente 28, 30, 32 und das Auslaufsegment 34 können jeweils in zwei parallelen Reihen Bewegungsvorrichtungen 16 aufnehmen. Es ist auch möglich, dass das das Einlaufsegment 26, die Transfersegmente 28, 30, 32 und das Auslaufsegment 34 zumindest abschnittsweise weitere parallele Bahnen zum weiteren Aufnehmen von Bewegungsvorrichtungen 16 aufweisen.

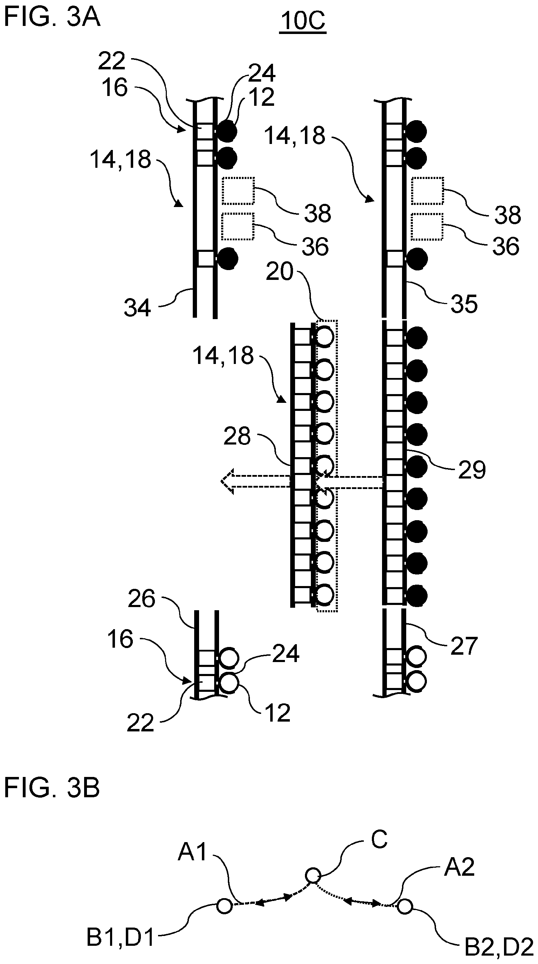

Die Figuren 3A und 3B zeigen eine Vorrichtung 10C mit zugehörigen Bewegungskurven A1, A2.

Die Vorrichtung 10C weist zwei Einlaufsegmente 26, 27, zwei Transfersegmente 28, 29 und zwei Auslaufsegmente 34, 35 auf. Das erste Einlaufsegment 26, das erste Transfersegment 28 und das erste Auslaufsegment 34 sind einander zugeordnet. Das zweite Einlaufsegment 27, das zweite Transfersegment 29 und das zweite Auslaufsegment 35 sind ebenfalls einander zugeordnet.

Das erste Transfersegment 28 bewegt sich auf der Bewegungskurve A1 hin- und herpendelnd zwischen der Einlauf-/Auslaufposition B1, D1 bei dem ersten Einlaufsegment 26 und dem ersten Auslaufsegment 34 einerseits und der Behandlungsposition C bei der Behälterbehandlungsvorrichtung 20 andererseits. In der Einlauf-/Auslaufposition B1, D1 übergibt das Transfersegment 28 Bewegungsvorrichtungen 16 mit behandelten Behältern 12 an das erste Auslaufsegment 34 und übernimmt Bewegungsvorrichtungen 16 mit unbehandelten Behältern 12 von dem ersten Einlaufsegment 26.

Das zweite Transfersegment 29 bewegt sich auf der Bewegungskurve A2 hin- und herpendelnd zwischen der Einlauf-/Auslaufposition B2, D2 bei dem zweiten Einlaufsegment 17 und dem zweiten Auslaufsegment 35 einerseits und der Behandlungsposition C bei der Behälterbehandlungsvorrichtung 20 andererseits. In der Einlauf-/Auslaufposition B2, D2 übergibt das Transfersegment 29 Bewegungsvorrichtungen 16 mit behandelten Behältern 12 an das zweite Auslaufsegment 35 und übernimmt Bewegungsvorrichtungen 16 mit unbehandelten Behältern 12 von dem zweiten Einlaufsegment 27.

Beide Bewegungskurven A1, A2 bzw. beide Transfersegmente 28, 29 teilen sich die Behandlungsposition C bzw. die Behälterbehandlungsvorrichtung 20 abwechselnd. Während eines der Transfersegmente 28 oder 29 bei der Behälterbehandlungsvorrichtung 20 in der Behandlungsposition C positioniert ist, ist das andere Transfersegment 28 oder 29 in der jeweiligen Einlauf-/Auslaufposition B1, D1 oder B2, D2 positioniert.

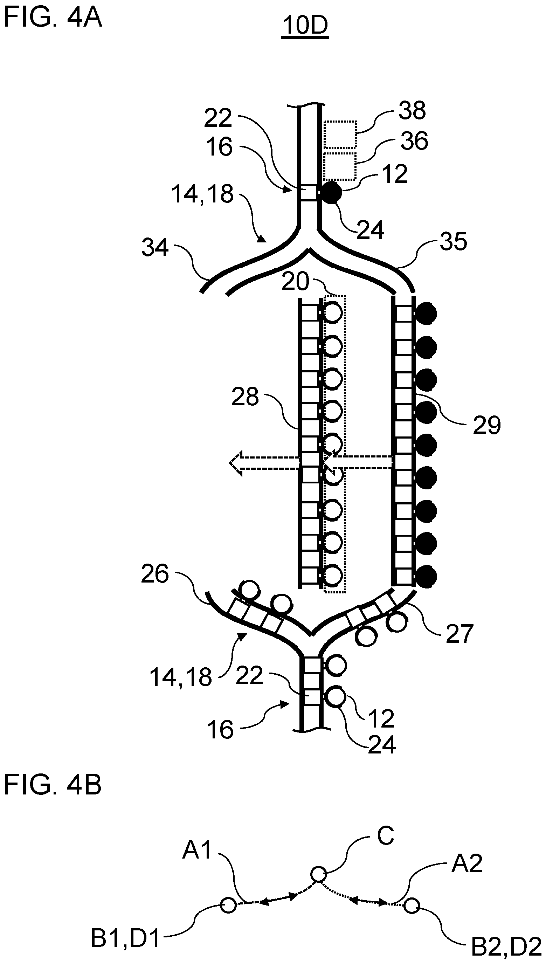

Die Figuren 4A und 4B zeigen eine Vorrichtung 10D mit zugehörigen Bewegungskurven A1, A2.

Ein Unterschied der Vorrichtung 10D zur Vorrichtung 10C von Figur 3A besteht darin, dass die Einlaufsegmente 26 und 27 nicht separat ausgebildet sind, sondern stromabwärts von einer gemeinsamen Weiche (z. B. Y-Weiche) angeordnet sind. Ebenso können bspw. auch die Auslaufsegmente 34 und 35 nicht separat ausgebildet sein, sondern stromaufwärts von einer gemeinsamen Weiche (z. B. Y-Weiche) angeordnet sein.

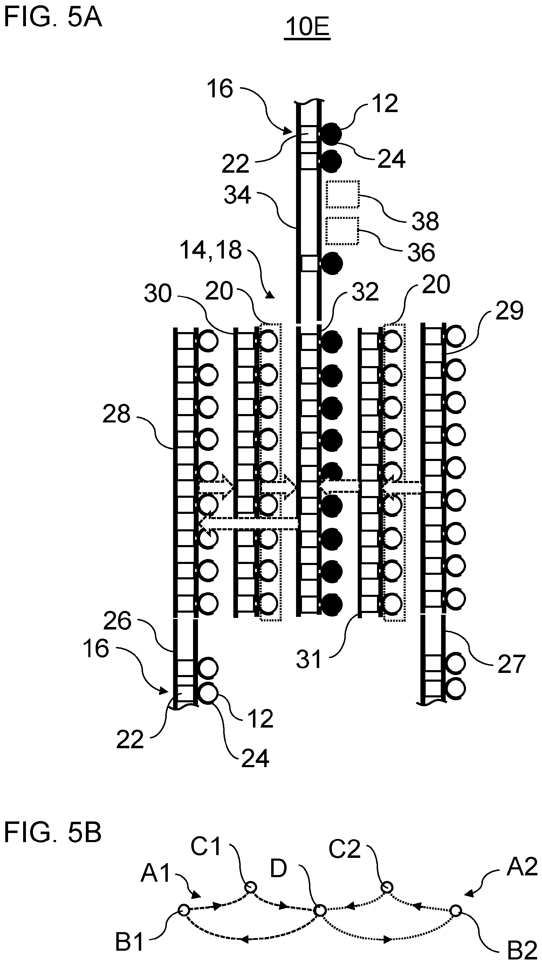

Die Figuren 5A und 5B zeigen eine Vorrichtung 10E mit zugehörigen Bewegungskurven A1, A2.

Die Vorrichtung 10E weist zwei Einlaufsegmente 26, 27, mehrere Transfersegmente 28, 29, 30, 31, 32 und ein Auslaufsegment 34 auf. Ein nicht dargestelltes, weiteres Transfersegment ist gerade auf dem Rückweg von dem Auslaufsegment 34 zu dem zweiten Einlaufsegment 27.

Die Transfersegmente 28, 30, 32 bewegen sich entlang der Bewegungskurve A1 nacheinander zu dem ersten Einlaufsegment 26 (Einlaufposition B1), einem ersten Abschnitt der Behälterbehandlungsvorrichtung 20 (Behandlungsposition C1), dem Auslaufsegment 34 (Auslaufposition D) und wieder zurück zu dem ersten Einlaufsegment 26 (Einlaufposition B1). Die Transfersegmente 29, 31 und das nicht dargestellte, weitere Transfersegment bewegen sich entlang der Bewegungskurve A2 nacheinander zu dem zweiten Einlaufsegment 27 (Einlaufposition B2), einem zweiten Abschnitt der Behälterbehandlungsvorrichtung 20 (Behandlungsposition C2), dem Auslaufsegment 34 (Auslaufposition D) und wieder zurück zu dem zweiten Einlaufsegment 27 (Einlaufposition B2). Die Transfersegmente 28, 29, 30, 31, 32 und das nicht dargestellte, weitere Transfersegment teilen sich das Auslaufsegment 34 bzw. die Bewegungskurven A1, A2 teilen sich die Auslaufposition D. Abwechselnd kann eines der entlang der Bewegungskurve A1 bewegten Transfersegmente 28, 30, 32 mit einem der entlang der Bewegungskurve A2 bewegten Transfersegmente 29, 31 (sowie das nicht dargestellte, weitere Transfersegment) in der Auslaufposition D positioniert werden.

Die Figuren 6A und 6B zeigen eine Vorrichtung 10F mit zugehörigen Bewegungskurven A1, A2.

Ein Unterschied zwischen der Vorrichtung 10F und der Vorrichtung 10E von Figur 5A besteht darin, dass die Halterung 24 der Bewegungsvorrichtungen 16 als Doppelhalterung ausgeführt sind. Die Doppelhalterung ist zum gleichzeitigen Halten von jeweils zwei Behältern 12, vorzugsweise an entgegengesetzten Außenseiten der jeweiligen Bewegungsvorrichtung 16 bzw. des Grundkörpers 22 ausgebildet.

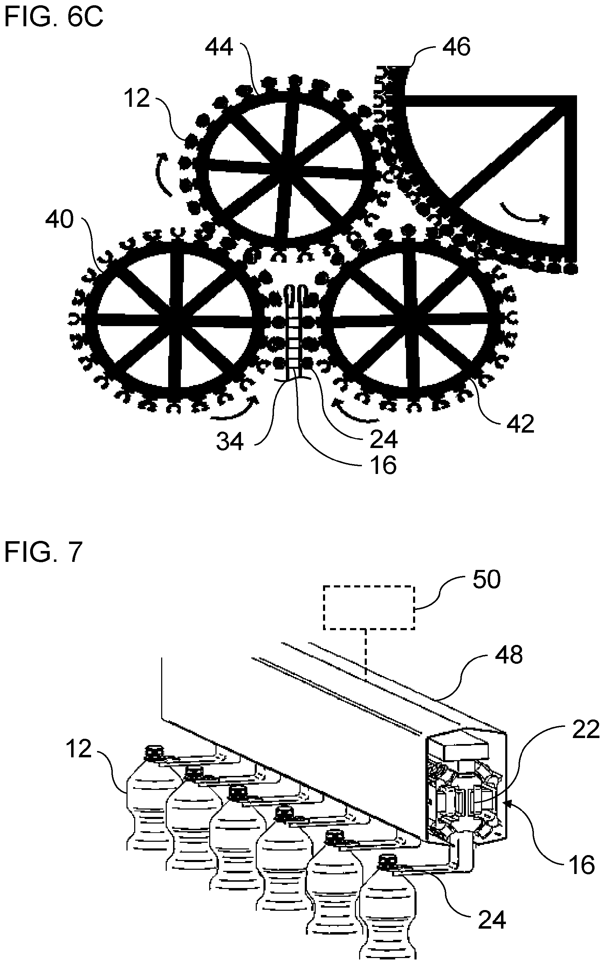

Die Figur 6C zeigt einen Abschnitt einer Behälterbehandlungsanlage, die sich beispielsweise an die Vorrichtung 10F der Figur 6A anschließen kann.

Der Abschnitt weist einen ersten Transportstern 40, einen zweiten Transportstern 42 und einen dritten Transportstern 44 auf. Der erste und zweite Transportstern 40, 42 sind auf entgegengesetzten Seiten des Auslaufsegments 34 angeordnet. Die Transportsterne 40, 42 übernehmen jeweils einen Behälter 12 von der als Doppelhalterung ausgeführten Halterung 24 der Bewegungsvorrichtungen 16. Die Bewegungsvorrichtungen 16 können nach der Behälterübergabe auf nicht näher gezeigte Weise wieder zurück zu erneuten Behälteraufnahme und dann wieder zu einem Einlaufsegment bewegt werden.

Der erste Transportstern 40 übergibt die übernommenen Behälter 12 an den dritten Transportstern 44, der die Behälter 12 wiederum an das Karussell 46 übergibt. Der zweite Transportstern 40 übergibt die übernommenen Behälter 12 direkt an das Karussell 46, vorzugsweise in Lücken zwischen denjenigen Behältern 12, die vom dritten Transportstern 44 an das Karussell 46 übergeben wurden. Das Karussell 46 kann bspw. als Etikettierkarussell zum Etikettieren der Behälter 12 ausgeführt sein.

Die Figur 7 zeigt ein Ausführungsbeispiel für das Transfersegment 28. Die übrigen hierin beschriebenen Transfersegmente können wie das Transfersegment 28 ausgebildet sein.

Am Transfersegment 28 können mehrere, z. B. sechs, Bewegungsvorrichtungen 16 aufgenommen bzw. abgestützt werden. Das Transfersegment 28 kann in einer Abdeckung bzw. einem Gehäuse 48 aufgenommen sein. Das Gehäuse 48 kann das Transfersegment 28 und somit die daran gehaltenen Bewegungsvorrichtungen 16 zumindest teilweise schützend umgeben. Die Halterungen 24 können aus dem Gehäuse 48 herausragen.

Das Transfersegment 28 kann bspw. über das Gehäuse 48 in Wirkverbindung mit einer Einrichtung 50 (nur schematisch in Figur 7 dargestellt sein) sein. Die Einrichtung 50 ist dazu ausgebildet, das Transfersegment 28 entlang der gewünschten Bewegungskurve (z. B. A, A1, A2 hierin) zu bewegen. Beispielsweise kann die Einrichtung als Vertikal- und/oder Horizontalaufzug ausgeführt sein. Es ist bspw. auch möglich, dass die Einrichtung 50 Knickarmhebel aufweist, die das Transfersegment 28 unabhängig von den anderen Transfersegmenten bewegen (z. B. verschieben, heben, senken, drehen) kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Behälterbehandlungsvorrichtung, der mehreren Bewegungsvorrichtungen und/oder der Transportbahn des unabhängigen Anspruchs 1 offenbart.

### Bezugszeichenliste

- 10A-10F: Vorrichtung zum Behandeln von Behältern
- 12: Behälter
- 14: Transportbahn
- 16: Bewegungsvorrichtung
- 18: Linearantrieb
- 20: Behälterbehandlungsvorrichtung
- 22: Grundkörper
- 24: Halterung
- 26: Einlaufsegment
- 27: Einlaufsegment
- 28: Transfersegment
- 29: Transfersegment
- 30: Transfersegment
- 31: Transfersegment
- 32: Transfersegment
- 34: Auslaufsegment
- 35: Auslaufsegment
- 36: Stickstoffdroppler
- 38: Verschließeinrichtung
- 40: Transportstern
- 42: Transportstern
- 44: Transportstern
- 46: Karussell
- 48: Gehäuse
- 50: Einrichtung

- A, A1, A2: Bewegungskurve
- B, B1, B2: Einlaufposition
- C, C1, C2: Behandlungsposition
- D, D1, D2: Auslaufposition

## Patentansprüche

1. Vorrichtung (10A-10F) zum Behandeln von Behältern (12), aufweisend:
eine Behälterbehandlungsvorrichtung (20);
mehrere Bewegungsvorrichtungen (16), die, vorzugsweise unabhängig voneinander, bewegbar und dazu ausgebildet sind, jeweils mindestens einen Behälter (12) zu halten; und
eine Transportbahn (14), entlang der die mehreren Bewegungsvorrichtungen (16) bewegbar sind,
wobei:
die Transportbahn (14) mehrere Transfersegmente (28, 29, 30, 31, 32), entlang denen jeweils eine Gruppe der mehreren Bewegungsvorrichtungen (16) bewegbar ist, aufweist, und
die mehreren Transfersegmente (28, 29, 30, 31, 32) nacheinander zu der Behälterbehandlungsvorrichtung (20) zum Behandeln der von der jeweiligen Gruppe der mehreren Bewegungsvorrichtungen (16) gehaltenen Behälter (12) bewegbar sind.

2. Vorrichtung (10A-10F) nach Anspruch 1, ferner aufweisend:
einen Linearantrieb (18), vorzugsweise Langstator-Linearantrieb oder Kurzstator-Linearantrieb, zum Antreiben der mehreren Bewegungsvorrichtungen (16) entlang der Transportbahn (14).

3. Vorrichtung (10A-10F) nach Anspruch 1 oder Anspruch 2, wobei:
die mehreren Transfersegmente (28, 29, 30, 31, 32) auf einer Bewegungskurve (A; A1; A2) bewegbar sind, die in einer Ebene verläuft, die geneigt, vorzugsweise senkrecht, zu einer Längsachse der mehreren Transfersegmente (28, 29, 30, 31, 32) ausgerichtet ist, vorzugsweise umlaufend oder pendelnd hin- und herbewegbar.

4. Vorrichtung (10A-10F) nach Anspruch 3, wobei die Bewegungskurve aufweist:
eine Einlaufposition (B; B1; B2), in der das jeweilige Transfersegment (28, 29, 30, 31, 32) die jeweilige Gruppe der mehreren Bewegungsvorrichtungen (16) empfängt;
eine Behandlungsposition (C; C1; C2), in der das jeweilige Transfersegment (28, 29, 30, 31, 32) an der Behälterbehandlungsvorrichtung (20) zur Behandlung der von der jeweiligen Gruppe der mehreren Bewegungsvorrichtungen (16) gehaltenen Behälter (12) positioniert ist; und
eine Auslaufposition (D; D1; D2), in der das jeweilige Transfersegment (28, 29, 30, 31, 32) die jeweilige Gruppe der mehreren Bewegungsvorrichtungen (16) abgibt.

5. Vorrichtung (10A-10F) nach Anspruch 4, wobei:
ein Bewegungsabschnitt der Bewegungskurve (A; A1; A2) von der Einlaufposition (B; B1; B2) zu der Behandlungsposition (C; C1; C2) eine Vertikalbewegung nach oben aufweist, sodass bevorzugt eine Wirkverbindung zwischen der Behälterbehandlungsvorrichtung (20) und den von der jeweiligen Gruppe der mehreren Bewegungsvorrichtungen (16) gehaltenen Behältern (12) erreichbar ist; und/oder
ein Bewegungsabschnitt der Bewegungskurve (A; A1; A2) von der Behandlungsposition (C; C1; C2) zu der Auslaufposition (D; D1; D2) eine Vertikalbewegung nach unten aufweist, sodass bevorzugt eine Wirkverbindung zwischen der Behälterbehandlungsvorrichtung (20) und den von der jeweiligen Gruppe der mehreren Bewegungsvorrichtungen (16) gehaltenen Behältern (12) trennbar ist.

6. Vorrichtung (10A-10F) nach Anspruch 4 oder Anspruch 5, wobei:
ein erstes Transfersegment der mehreren Transfersegmente (28, 29, 30, 31, 32) in der Einlaufposition (B; B1; B2) ist, während ein zweites Transfersegment der mehreren Transfersegmente (28, 29, 30, 31, 32) in einem von der Behandlungsposition (C; C1; C2) und der Auslaufposition (D; D1; D2) ist und optional während ein drittes Transfersegment der mehreren Transfersegmente (28, 29, 30, 31, 32) im anderen von der Behandlungsposition (C; C1; C2) und der Auslaufposition (D; D1; D2) ist.

7. Vorrichtung (10A-10F) nach einem der vorherigen Ansprüche, wobei:
die Behälterbehandlungsvorrichtung (20) oberhalb von den mehreren Transfersegmenten (28, 29, 30, 31, 32) und/oder oberhalb von der Transportbahn (14) angeordnet, vorzugweise aufgehängt, ist; und/oder
die Behälterbehandlungsvorrichtung (20) mehrere, vorzugsweise linear angeordnete, Fülleinrichtungen zum Befüllen der Behälter (12) aufweist; und/oder
die Behälterbehandlungsvorrichtung (20) mehrere, vorzugsweise linear angeordnete, Sterilisationseinrichtungen zum Sterilisieren der Behälter (12) aufweist; und/oder
die Behälterbehandlungsvorrichtung (20) mehrere, vorzugsweise linear angeordnete, Rinseinrichtungen zum Rinsen der Behälter (12) aufweist.

8. Vorrichtung (10A-10F) nach einem der vorherigen Ansprüche, wobei mindestens eines der nachfolgenden Merkmale erfüllt ist:
die mehreren Transfersegmente (28, 29, 30, 31, 32) parallel angeordnet sind;
die mehreren Transfersegmente (28, 29, 30, 31, 32) translatorisch und/oder rotatorisch bewegbar sind, vorzugsweise unter Beibehaltung einer parallelen Ausrichtung zueinander;
die mehreren Transfersegmente (28, 29, 30, 31, 32) geradlinig ausgeführt sind;
die mehreren Transfersegmente (28, 29, 30, 31, 32) als Schienen, Rollbahnen oder Gleitbahnen ausgeführt sind;
die mehreren Transfersegmente (28, 29, 30, 31, 32) jeweils in einem eigenen Gehäuse (48) aufgenommen sind, das bevorzugt mit dem jeweiligen Transfersegment (28, 29, 30, 31, 32) mitbewegbar ist; und
die mehreren Transfersegmente (28, 29, 30, 31, 32) zumindest abschnittsweise mehrbahnig, vorzugsweise doppelbahnig, zum jeweils parallelen Transportieren der Gruppe der mehreren Bewegungsvorrichtungen (16) ausgeführt sind.

9. Vorrichtung (10A-10F) nach einem der vorherigen Ansprüche, wobei:
die mehreren Bewegungsvorrichtungen (16) jeweils eine Einfachhalterung, die zum Halten jeweils eines einzigen Behälters (12) ausgebildet ist, aufweist; oder
die mehreren Bewegungsvorrichtungen (16) jeweils eine Doppelhalterung, die zum gleichzeitigen Halten von jeweils zwei Behältern (12), vorzugsweise an entgegengesetzten Außenseiten der jeweiligen Bewegungsvorrichtung (16), ausgebildet ist, aufweist.

10. Vorrichtung (10A-10F) nach einem der vorherigen Ansprüche, wobei:
die Transportbahn (14) mindestens ein Einlaufsegment (26, 27) aufweist, von dem die mehreren Bewegungsvorrichtungen (16) zu den mehreren Transfersegmenten (28, 29, 30, 31, 32) bewegbar sind; und
die Transportbahn (14) mindestens ein Auslaufsegment (34, 35) aufweist, zu dem die mehreren Bewegungsvorrichtungen (16) von den mehreren Transfersegmenten (28, 29, 30, 31, 32) bewegbar sind.

11. Vorrichtung (10A-10F) nach Anspruch 10, wobei:
das mindestens eine Einlaufsegment (26, 27) und das mindestens eine Auslaufsegment parallel (34, 35) beabstandet zueinander und/oder nicht-fluchtend miteinander angeordnet sind.

12. Vorrichtung (10A; 10B, 10E; 10F) nach Anspruch 10 oder Anspruch 11 wobei:
ein Einlaufsegment (26) und ein Auslaufsegment (34) umfasst sind; und
die mehreren Transfersegmente (28, 29, 30, 31, 32) auf einer geschlossenen Bewegungskurve (A; A1; A2) von dem Einlaufsegment (26) zu der Behälterbehandlungsvorrichtung (20) zu dem Auslaufsegment (34) und zurück zu dem Einlaufsegment (26) bewegbar sind, vorzugsweise nacheinander.

13. Vorrichtung (10E; 10F) nach Anspruch 10 oder Anspruch 11, wobei:
ein erstes Einlaufsegment (26), ein zweites Einlaufsegment (27) und ein Auslaufsegment (34) umfasst sind;
mindestens ein erstes der mehreren Transfersegmente (28, 29, 30, 31, 32) auf einer ersten geschlossenen Bewegungskurve (A1) von dem ersten Einlaufsegment (26) zu einem ersten Abschnitt der Behälterbehandlungsvorrichtung (20) zu dem Auslaufsegment (34) und zurück zu dem ersten Einlaufsegment (26) bewegbar ist, vorzugsweise nacheinander; und
mindestens ein zweites der mehreren Transfersegmente (28, 29, 30, 31, 32) auf einer zweiten geschlossenen Bewegungskurve (A2) von dem zweiten Einlaufsegment (27) zu einem zweiten Abschnitt der Behälterbehandlungsvorrichtung (20) zu dem Auslaufsegment (34) und zurück zu dem zweiten Einlaufsegment (27) bewegbar ist, vorzugsweise nacheinander.

14. Vorrichtung (10C; 10D) nach Anspruch 10 oder Anspruch 11 wobei:
ein erstes Einlaufsegment (26), ein zweites Einlaufsegment (27), ein erstes Auslaufsegment (34) und ein zweites Auslaufsegment (35) umfasst sind;
ein erstes Transfersegment der mehreren Transfersegmente (28, 29, 30, 31, 32) hin- und herbewegbar zwischen einerseits dem ersten Einlaufsegment (26) und dem ersten Auslaufsegment (34) und andererseits der Behälterbehandlungsvorrichtung (20) ist, vorzugsweise pendelnd; und
ein zweites Transfersegment der mehreren Transfersegmente (28, 29, 30, 31, 32) hinund herbewegbar zwischen einerseits dem zweiten Einlaufsegment (27) und dem zweiten Auslaufsegment (35) und andererseits der Behälterbehandlungsvorrichtung (20) ist, vorzugsweise pendelnd.

15. Vorrichtung (10A-10F) nach einem der Ansprüche 10 bis 14, ferner aufweisend:
eine Verschließeinrichtung (38), die zum Verschießen der Behälter (12) ausgebildet und entlang des mindestens einen Auslaufsegments (34, 35) angeordnet ist; und/oder
einen Stickstoffdroppler (36), der zum Behandeln der Behälter (12) ausgebildet und entlang des mindestens einen Auslaufsegments (24, 25) angeordnet ist.
